# EUROPÄISCHE PATENTSCHRIFT

(11) **EP 0 933 013 B1**
(45) Veröffentlichungstag und Bekanntmachung des Hinweises auf die Patenterteilung: **11.12.2002**
(21) Anmeldenummer: 99101250.1
(22) Anmeldetag: 23.01.1999
(51) Int. Cl.: A01D 34/54

(54) **Verstellmechanismus und Schneideinheit**
Adjusting mechanism and cutting unit
Mécanisme de réglage et unité de coupe

(30) Priorität: 30.01.1998 US 15920
(43) Veröffentlichungstag der Anmeldung: 04.08.1999
(73) Patentinhaber: DEERE & COMPANY, Moline, Illinois 61265-8098 (US)
(72) Erfinder: Thier, Richard David, Juneau, Wisconsin 53039 (US); Reichen, Ronald Lee, Horicon, Wisconsin 53032 (US); Swenson, Phillip Orland, Beaver Dam, Wisconsin 53916 (US); Niosi, Donald Emil, Prior Lake, Minnesota 55372 (US)
(74) Vertreter: Magin, Ludwig Bernhard

(56) Entgegenhaltungen:
- EP-A- 0 106 452
- WO-A-91/03927
- DE-A- 1 482 913
- DE-A- 2 212 884
- GB-A- 516 932
- GB-A- 2 137 063
- US-A- 1 802 304
- US-A- 2 335 054
- US-A- 2 624 168

## Beschreibung

Die Erfindung betrifft einen Verstellmechanismus mit einem Verstellelement, das an einem verschwenkbar an einem Rahmen einer Schneideinheit anbringbaren Untermesserträger außerhalb dessen Schwenkachse angreift und durch wenigstens ein an dem Rahmen angebrachtes Führungselement in seiner Längserstreckung verschiebbar geführt wird, mit einem Einstellmittel, das an dem Verstellelement anbringbar und an dem Führungselement einerseits anlegbar ist, und mit einem Kraftspeicher, wobei der Kraftspeicher zwischen dem Führungselement und dem Untermesserträger angeordnet ist und den Untermesserträger von dem Führungselement wegdrückt. Die Erfindung betrifft darüber hinaus eine Schneideinheit.

Bekannte Spindelmäherschneideinheiten werden auf Golfplätzen oder anderen Rasenplätzen eingesetzt, die es erfordern, daß das Gras sehr genau geschnitten wird. Die Schneideinheiten werden üblicherweise durch angetriebene Fahrzeuge über den Boden bewegt. Diese Schneideinheiten umfassen eine im allgemeinen zylindrische Spindel, die eine Mehrzahl von Klingen aufweist, die in unmittelbarer Nähe zu einem stationären Untermesser rotieren, das mit einem Rahmen der Schneideinheit verbunden ist. Gras wird durch einen Schervorgang zwischen dem Untermesser und den rotierenden Klingen der Spindel geschnitten. Die Höhe, in der das Gras geschnitten wird, kann dadurch verstellt werden, daß die Höhe, in der der Rahmen der Schneideinheit über der Bodenoberfläche angeordnet ist, verändert wird. Das Untermesser wird routinemäßig gewartet und in einer passenden Stellung bezogen auf die Klingen der Spindel eingestellt, so daß das Gras wirkungsvoll geschnitten wird. Bekannte Schneideinheiten sehen ein Gestänge vor, das es dem Bediener erlaubt, die Stellung des Untermessers bezogen auf die Klingen der Spindel einzustellen.

Die Bedienungsanleitung von DEERE & COMPANY mit dem Titel "220A Walk-Behind Greensmower Operator's Manual" zeigt auf den Seiten 14-17 und 48-57 eine erste Ausführungsform eines Untermesserverstellmechanismus, der einen Gewindebolzen umfaßt, der einen unteren Endbereich aufweist, der mit dem Untermesser verbunden ist.

Der Gewindebolzen wird von einem Halter gehalten, der mit dem Rahmen der Schneideinheit fest verbunden ist. Eine Mutter ist auf den Gewindebolzen aufgeschraubt und oberhalb und in Anlage mit dem Halter angebracht. Die Mutter kann angezogen oder gelöst werden, um nach oben oder unten entlang des Gewindebolzens verschoben werden zu können. Der Gewindebolzen ist innerhalb der Windungen einer Druckfeder angeordnet, die den Gewindebolzen nach unten belastet, um die Mutter dicht in Anlage an dem Halter zu halten. Der Gewindebolzen verschiebt sich in bezug auf den Halter und den Rahmen der Schneideinheit, wenn die Mutter durch den Bediener gedreht wird. Ein Verschieben des Gewindebolzens bringt das Untermesser dazu, sich nach oben oder unten zu verschieben, was die Stellung des Untermessers in bezug auf die Klingen der Spindel einstellt. Die Druckfeder, die Mutter und der Halter halten den Gewindebolzen und das Untermesser in einer bestimmten gewählten Stellung. Die Druckfeder dient auch dazu, Spannungsverlust oder Spiel aus dem Gestänge zu entfernen, das in der Verbindung zwischen dem Gewindebolzen und Untermesser oder zwischen der Mutter, dem Gewindebolzen und dem Halter auftreten kann.

Eine andere Art von Untermesserverstellung wird in der Bedienungsanleitung der Toro Company mit dem Titel "8 & 11 Blade Cutting Units Operator's Manual" sowie der Bedienungsanleitung von Jacobsen mit dem Titel "Greens King V" gezeigt. Dieser Typ von Verstellmechanismus umfaßt einen Gewindebolzen, der mit dem Untermesser zur Veränderung der Stellung des Untermessers verbunden ist. Der Gewindebolzen ist innerhalb einer Öffnung in einem Halter angeordnet, und es ist ein Paar von Gegenmuttern auf den Gewindebolzen auf jeder Seite des Halters aufgeschraubt. Diese Gegenmuttern können verstellt werden, um die Stellung des Gewindebolzens und dadurch die Stellung des Untermessers zu verändern. Verstellungen werden durch ein Bestimmen der Stellung des Gewindebolzens durch ein Manipulieren der Mutter oberhalb des Halters, so daß sich das Untermesser in der passenden Stellung befindet, und einem anschließenden Festziehen der unteren Mutter nach oben gegen die Unterseite des Halters erzielt.

Solche Einstellgestänge mit zwei Gegenmuttern, können auch eine Druckfeder aufweisen, die Spannungsverlust und Spiel aus der Verbindung zwischen Gewindebolzen und Untermesser entfernt. Eine solche Anordnung wird in der Bedienungsanleitung von Jacobsen mit dem Titel "Greens Mower" gezeigt.

Die DE-A-2 212 884 zeigt eine Einstellvorrichtung für einen Spindelmäher. Die Einstellvorrichtung weist eine Gewindestange auf, welche mit einem Bett einer Gegenschneide verbunden ist. Die Gewindestange ist in einem ortsfest mit dem Spindelmäher verbundenen Halter angeordnet und dient zur Verstellung der Gegenschneide. Auf die Gewindestange ist eine Druckfeder aufgesetzt, welche eine dauerhafte Anlage eines mit der Gewindestange drehfest verbundenen Griffs mit dem Halter sicherstellt.

Das der Erfindung zugrunde liegende Problem wird in der unzureichenden Funktion und schwierigen Montage bekannter Einstellmechanismen für Untermesser und in der schwierigen Handhabung bekannter Spindelmäherschneideinheiten gesehen.

Dieses Problem wird erfindungsgemäß durch die Lehre der Patentansprüche 1 und 10 gelöst, wobei in den weiteren Patentansprüchen die Lösung in vorteilhafter Weise weiterentwickelnde Merkmale aufgeführt sind.

Auf diese Weise wird die Beweglichkeit des Untermesserträgers in bezug auf eine Verschwenkrichtung beschränkt, da das einerseits des Führungselements angeordnete Einstellmittel eine der Verschiebungsrichtungen des Verstellelements begrenzt. Dem Untermesser ist es dadurch nur noch möglich, gegen die Wirkung des Kraftspeichers, der vorzugsweise als eine Druckfeder ausgeführt ist, zu verschwenken. Dadurch können unerwünschte Bewegungen des Untermesserträgers und damit eines mit diesem verbundenen Untermessers unterbunden werden. Greift der Verstellmechanismus bzw. das Verstellelement dabei auf einer einer Schneidkante des Untermessers abgewandten Seite der Schwenkachse des Untermesserträgers an, so wird durch den erfindungsgemäßen Verstellmechanismus verhindert, daß das Untermesser beispielsweise, wenn es an ein Hindernis stößt, mit rotierenden Elementen, wie beispielsweise den Schneidkanten einer Mähspindel, in Kontakt kommt und beschädigt wird. Das Verstellelement kann als ein länglicher Teil beispielsweise als ein Bolzen oder eine Stange ausgebildet sein. Das Führungselement kann als Halter ausgebildet sein, wobei das Verstellelement beispielsweise in einer Öffnung oder einem Schlitz in dem Halter geführt werden kann. Auch ein Führungselement in der Art einer Schiene ist denkbar. Das Führungselement muß aber immer eine Verschiebung des Verstellelements in Richtung seiner Längenerstreckung ermöglichen. Die Schneideinheit weist vorzugsweise eine um eine im wesentlichen horizontale Achse rotierende Mähspindel auf, sie kann aber auch in anderer Art und Weise, beispielsweise in der Art eines Häckslers, beispielsweise für Erntemaschinen ausgeführt sein. Der Rahmen weist ein zweites von dem ersten Führungselement beabstandetes Führungselement zur verschiebbaren Führung des Einstellelements auf und das Einstellmittel wirkt mit dem zweiten Führungselement zusammen, so daß das Einstellmittel und damit ein Einstellvorgang nicht durch den Kraftspeicher beeinflußt wird, wodurch ungewollten Lageveränderungen des Untermesserträgers vorgebeugt wird. Zwischen dem ersten Führungselement und dem zweiten Führungselement ist ein weiteres Einstellelement vorgesehen, durch das die Stellung des Verstellelements bezogen auf das erste Führungselement unabhängig von dem Einstellmittel verstellt werden kann, so dass über dieses Einstellelement das Verstellelement gegen die Wirkung des Kraftspeichers verschoben werden kann. Dadurch kann auch erreicht werden, daß das erste Einstellmittel nicht mehr auf das zweite Führungselement wirkt. Dies kann beispielsweise zu Reinigungs- oder Wartungszwecken wünschenswert sein.

Vorzugsweise ist dieses zusätzliche Einstellmittel als eine Mutter ausgebildet, die auf das eventuell bereits zum Aufschrauben des ersten Einstellmittels an dem Verstellelement vorgesehene Gewinde aufgeschraubt und auf diesem verstellt werden kann. Es ist aber auch die Verwendung eines oder mehrerer Stifte oder Sicherungsringe o.ä. denkbar, die mit beabstandeten Öffnungen, Nuten etc. in oder an dem Verstellelement zusammenwirken können.

Kann das Einstellmittel bezogen auf das Verstellelement verschiedene Stellungen einnehmen, so kann die Stellung des Verstellelements bezogen auf das Führungselement und damit die Stellung des Untermesserträgers verändert werden. Vorzugsweise kann das Einstellmittel gegenüber dem Verstellelement über eine Gewindekombination verstellt werden, wodurch eine stufenlose Verstellung möglich ist. Es ist aber auch denkbar, das Einstellmittel in der Art eines Stifts oder Sicherungsrings auszubilden, der beispielsweise in an dem Verstellelement vorgesehene beabstandete Öffnungen, Nuten o.ä. eingreift.

Weist der Verstellmechanismus einen Abstandhalter, vorzugsweise in der Art eines Schulterstücks, auf, der zwischen dem Kraftspeicher und dem zweiten Einstellmittel angeordnet ist, so kann der Kraftspeicher mittels des Abstandhalters durch das zweite Einstellmittel von dem ersten Führungselement abgehoben werden. Dadurch ist der Kraftspeicher beispielsweise zur Wartung oder Reinigung zugänglich.

Es ist vorteilhaft, wenn das erste Führungselement und/oder das zweite Führungselement wenigstens einen Schlitz zur Führung des Verstellelements aufweisen. Ist dieser Schlitz einenends offen ausgebildet, so kann das Verstellelement durch diese Öffnung in den Schlitz eingebracht und wieder aus dem Schlitz entfernt werden. Dies kann die Montage vereinfachen oder die Reinigung und Wartung erleichtern.

Die Verstelleinrichtung kann wenigstens ein Sicherungselement aufweisen, das an dem Verstellelement anbringbar ist und durch das das Verstellelement wirksam an einem der Führungselemente vorzugsweise in dem Schlitz gehalten werden kann. Das Sicherungselement kann vorzugsweise entlang der Längsachse des Verstellelements vorgesehen sein. Es kann vorgesehen sein, daß das Sicherungselement so verstellt werden kann, daß es das Verstellelement nicht an einem der Führungselemente hält, so daß die über das Führungselement bestehende Verbindung zum Rahmen beispielsweise zu Wartungsarbeiten gelöst wird. Vorzugsweise ist das Sicherungselement mit dem ersten Einstellelement verbunden oder verbindbar.

Dies kann in einfacher Weise dadurch erreicht werden, daß sich der Schlitz in Richtung seines geöffneten Endes derart verengt, daß das Verstellelement, nicht aber das Sicherungselement, durch die Verengung gelangen kann. Das Sicherungselement kann als eine vorzugsweise auf das Verstellelement aufsetz- oder aufschraubbare Hülse ausgeführt sein, deren Außendurchmesser größer ist als der Querschnitt der Verengung. Das Sichern des Verstellelements durch das Sicherungselement in dem sich verengenden Schlitz kann auch durch Vorsprünge an dem Sicherungselement oder durch andere besondere Ausbildungen des Sicherungselements erfolgen.

Zwischen dem ersten und dem zweiten Einstellmittel kann ein Abstandhalter vorgesehen sein. Dieser Abstandhalter ist vorzugsweise so ausgeführt, daß das zweite Einstellmittel nicht in Anlage mit dem ersten Führungselement treten kann, sondern nur die Lage des ersten Einstellmittels sichert. Das dadurch auftretende Spiel zwischen dem zweiten Einstellmittel und dem ersten Führungselement erlaubt es dem Untermesser beim Auftreffen auf ein Hindernis in einer Richtung, die vorzugsweise den Klingen der rotierenden Mähspindel abgewandt ist, auszuweichen.

Besonders vorteilhaft ist eine Schneideinheit vorzugsweise eine Spindelmäherschneideinheit mit einem erfindungsgemäßen Verstellmechanismus auszustatten, so daß ein an dem Untermesserträger angebrachtes Untermesser in einfacher und genauer Weise verstellt werden und der Untermesserträger Hindernissen ausweichen kann, ohne daß das Ausweichen zu Beschädigungen des Untermessers oder der Schneideinheit führt.

In der Zeichnung sind zwei nachfolgend näher beschriebene Ausführungsbeispiele der Erfindung dargestellt. Es zeigt:
- Fig. 1: eine Schneideinheit mit einem erfindungsgemäßen Verstellmechanismus,
- Fig. 2: die Schneideinheit mit dem Verstellmechanismus in einer Betriebsstellung (durchgezogenen Linien) und einer Wartungsstellung (unterbrochene Linien),
- Fig. 3: ein erstes Führungselement des Verstellmechanismus,
- Fig. 4: ein zweites Führungselement und
- Fig. 5: eine alternative Ausführungsform eines erfindungsgemäßen Verstellmechanismus.

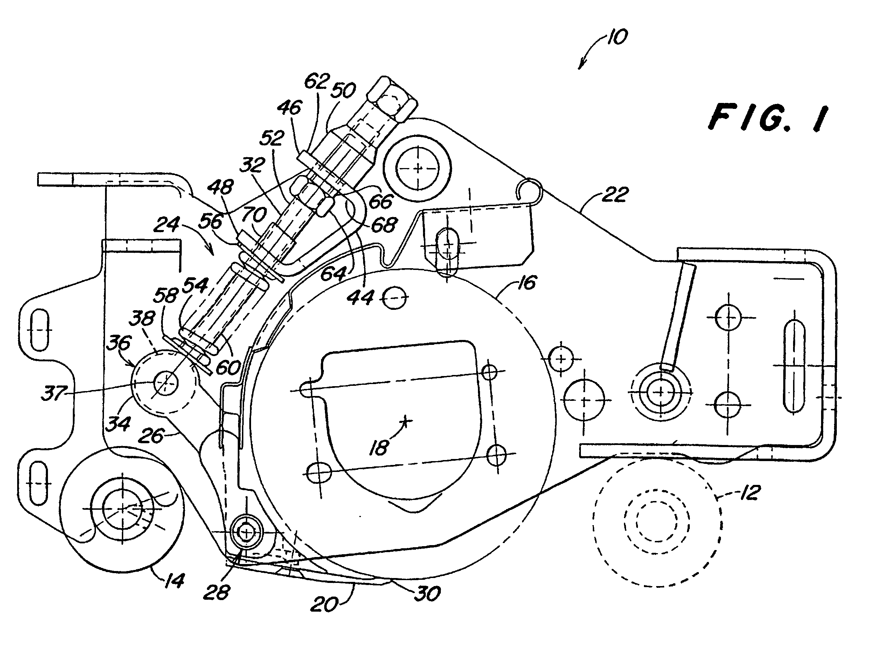

Es wird Bezug genommen auf die Figuren 1 - 5, in denen die bevorzugte Ausführungsform der vorliegenden Erfindung gezeigt wird. Eine Spindelmäherschneideinheit bzw. eine Schneideinheit 10 ist üblicherweise über Schubarme an einem Mähgerät angebracht. Wenn das Mähgerät über den Boden bewegt wird, treiben die zwischen dem Fahrzeug und der Schneideinheit 10 angeordneten Schubarme die Schneideinheit 10 mit dem Fahrzeug in üblicher Weise über den Boden. Die Schneideinheit 10 weist vordere und rückwärtige Walzen 12 und 14 auf, die sich in Berührung mit dem Boden drehen und die Schneideinheit 10 während des Betriebs stützen. Die Schneideinheit 10 weist eine im allgemeinen zylindrische Spindel 16 mit einer Mehrzahl von Klingen auf, die um eine sich quer erstreckende Zentralachse 18 der Spindel 16 rotieren. Wenn die Klingen 16 rotieren, streichen sie in sehr geringem Abstand an einem Untermesser 20 vorbei, das an einem Rahmen 22 der Schneideinheit 10 wirksam befestigt ist. Die Klingen 16 und das Untermesser 20 wirken zusammen, um Gras in einem Schervorgang in üblicher Weise zu schneiden, wenn die Schneideinheit 10 vorwärts bewegt wird.

Durch die vorliegende Erfindung wird ein Gestänge 24 zur Verfügung gestellt, um die Stellung des Untermessers 20 bezogen auf die Klingen 16 einzustellen, so daß der Schervorgang feinjustiert werden kann, um eine hohe Schnittqualität zu ermöglichen. Das Untermesser 20 ist mit einem Untermesserträger 26 verbunden, der mit dem Rahmen 22 schwenkbar über einen Schwenkverbindungsmechanismus oder ein Schwenkelement 28 verbunden ist. Der Untermesserträger 26 kann eingestellt werden, um um das Schwenkelement 28 zu verschwenken, um es einer vorderen Schneidkante 30 des Untermesser 20 zu erlauben im allgemeinen vertikal zu oder weg von den Klingen 16 zu schwingen, um dabei den Schervorgang zwischen dem Untermesser 20 und den Klingen 16 einzustellen. Ein in der Art einer Gewindeöse ausgeführter Gewindebolzen bzw. ein Verstellelement 32 ist schwenkbar mit einem rückwärtigen Bereich 34 des Untermesserträgers 26 über ein Verbindungselement 36 verbunden. Das Verbindungselement 36 weist ein Bolzenelement 37 mit Kopf auf, das sich horizontal durch eine Öse 38 des Verstellelements 32 erstreckt und verbindet das Verstellelement 32 schwenkbar mit dem Untermesserträger 26. Der Kopf an einem Endbereich des Bolzenelements 37 und ein Sicherungsstecker, der von dem anderen Endbereich des Bolzenelements 37 aufgenommen wird, hindern das Bolzenelement 37 daran, sich aus der Öse 38 des Verstellelements 32 zu schieben.

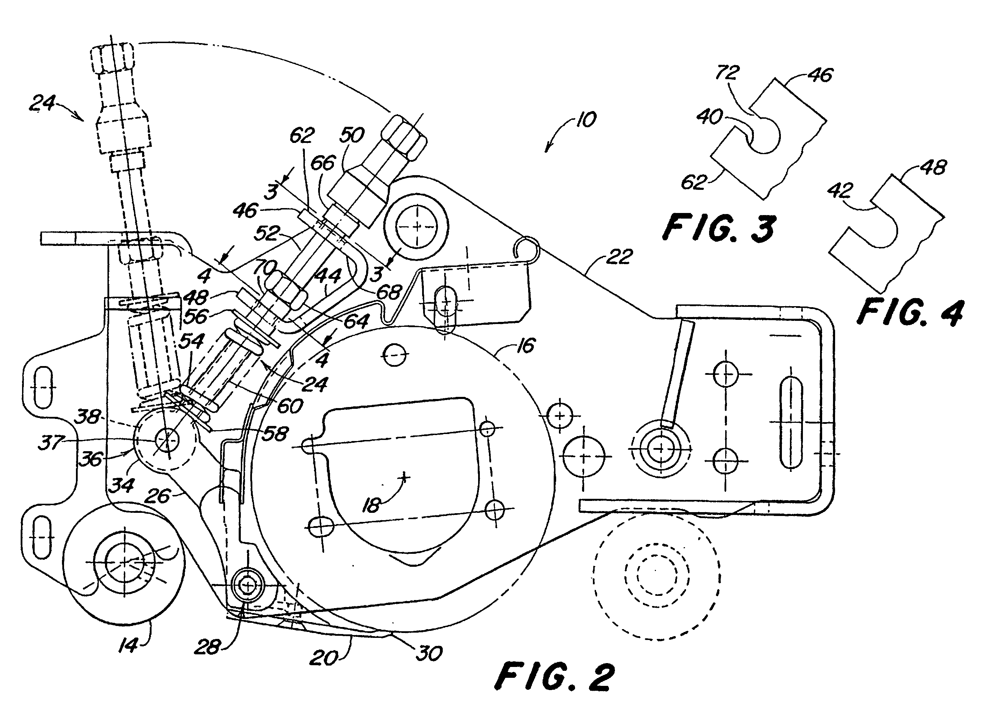

Das Verstellelement 32 ist in Schlitzen 40 und 42 angeordnet, die durch einen zweiarmigen Halter 44 bestimmt werden. Die zwei Arme des Halters 44 bestimmen erste und zweite Führungselemente 46 und 48, in die die Schlitze 40 und 42, wie es in den Figuren 3 und 4 gezeigt wird, eingeformt sind. Ein Einstellmittel 50 weist ein Innengewinde auf, das in ein Gewinde an einem oberen Endbereich 52 des Verstellelements 32 eingreift. Wenn ein Bediener das Einstellmittel 50 auf dem Gewinde des Gewindebolzens 32 dreht, verschiebt sich das Verstellelement 32 bezogen auf den Halter 44 entlang der Mittelachse des Verstellelements 32. Wenn sich das Verstellelement 32 in dieser Weise entlang seiner Mittelachse verschiebt, schwenkt der Untermesserträger 26 um das Schwenkelement 28 und bewirkt, daß die Schneidkante des Untermessers 20 nach oben oder unten bezogen auf die Klingen 16 verschwenkt. Auf diese Weise wird das Untermesser 20 eingestellt.

Ein als Druckfeder ausgeführter Kraftspeicher 54 ist zwischen einer ersten und einer zweiten Unterlegscheibe 56 und 58 angeordnet. Das Verstellelement 32 ist innerhalb der Windungen des Kraftspeichers 54 angeordnet. Der Kraftspeicher 54 wird zwischen dem Halter 44 und dem Untermesserträger 26 zusammengedrückt und wirkt auf diese über die Unterlegscheiben 56 und 58 eine Kraft aus. Der Kraftspeicher 54 dient dazu, das Spiel oder den Spannungsverlust aus dem Gestänge 24 an dem oberen Endbereich 52 und dem unteren Endbereich 60 des Verstellelements 32 zu entfernen. An dem unteren Endbereich 60 des Verstellelements 32 drückt der Kraftspeicher 54 nach unten gegen die zweite Unterlegscheibe 58, die nach unten gegen Bereiche des Untermesserträgers 26 drückt. Der Kraftspeicher 54 drängt das Verstellelement 32 auch wirksam bezogen auf den Untermesserträger 26 an dieser Stelle nach oben. Dadurch nimmt der Kraftspeicher 54 jedes Spiel oder jeden Spannungsverlust aus der Verbindung zwischen dem Verstellelement 32 und dem Untermesserträger 26, wodurch das Untermesser 20 fest in der gewählten Stellung gehalten wird. An dem oberen Endbereich 52 des Verstellelements 32 drückt der Kraftspeicher 54 nach oben gegen die erste Unterlegscheibe 56, die nach oben gegen das Führungselement 48 des Halters 44 drückt. Der Kraftspeicher 54 drängt das Verstellelement 32 auch wirksam nach oben, bezogen auf den Halter 44 in dieser Stellung. Dies bewirkt, daß das Einstellmittel 50 fest nach unten gegen eine obere Oberfläche 62 des ersten Arms 46 des Halters 44 gedrückt wird. Auf diese Weise entfernt der Kraftspeicher 54 jeden Spannungsverlust oder jedes Spiel zwischen dem Verstellelement 32, dem Einstellmittel 50 und dem Halter 44. Die Entfernung von Spannungsverlust an dieser Stelle hilft, das Untermesser 20 fest in der gewählten Stellung zu halten, so daß das Untermesser 20 nicht an seinem Platz taumelt oder sich während des Mähbetriebs unerwünschterweise verschiebt. Die vorliegende Erfindung eliminiert daher Spannungsverlust bzw. Spiel an beiden Endbereichen des Verstellelements 32.

Der Kraftspeicher 54 der vorliegenden Erfindung drückt den rückwärtigen Bereich 34 des Untermesserträgers 26 nach unten, was die vordere Schneidkante 30 des Untermessers 20 nach oben zu der Spindel 16 zwingt. Die Anlage des Einstellmittels 50 gegen die obere Oberfläche 62 des ersten Führungselements 46 des Halters 44 hindert das Untermesser 20 wirksam daran, sich durch die Kraft, die durch den Kraftspeicher 54 eingebracht wird, nach oben in die Klingen 16 zu schieben. Wenn das Untermesser 20 während des Mähvorgangs auf ein Hindernis trifft, wird das Untermesser 20 allgemein durch die Anlage des Einstellmittels 50 gegen das Führungselement 46 des Halters 44 daran gehindert sich nach oben in die Klingen 16 zu schieben. Ein als sechseckige Mutter ausgeführtes zweites Einstellmittel 64 ist auf dem Verstellelement 32 in einer Position zwischen dem ersten und dem zweiten Führungselement 46 und 48 des Halters 44 aufgeschraubt. Während des Mähvorgangs ist das zweite Einstellmittel 64 an einer Schulter oder einem Sicherungselement 66 des ersten Einstellmittels 50 angeordnet, um zu helfen, das Einstellmittel 50 in der gewählten Stellung zu sichern. Das Sicherungselement 66 beabstandet das zweite Einstellmittel 64 wirksam von einer Unterseite 68 des Führungselements 46 des Halters 44. Daher wird das zweite Einstellmittel 64, wenn es nach oben gegen das Sicherungselement 66 vor Beginn des normalen Mähvorgangs festgezogen wird, nicht das Führungselement 46 des Halters 44 berühren oder nach oben gegen ihn pressen, was möglicherweise das Verstellelement 32 zum Verschieben bringt. Da das zweite Einstellmittel 64 das Führungselement 46 des Halters 44 nicht berührt, neigt das zweite Einstellmittel 64 nicht dazu, die Stellung des Untermessers 20 zu verändern, wenn das zweite Einstellmittel 64 noch oben angezogen wird, um das Einstellmittel 50 an seinem Platz zu sichern.

Wenn Wartungsarbeiten an dem Untermesser 20 oder an anderen Bereichen der Schneideinheit 10 durchgeführt werden müssen, kann das Gestänge 24 gegen den Uhrzeigerdrehsinn, wie es in Fig. 2 gezeigt wird, um die Achse verschwenkt werden, die durch das Verbindungselement 36 bestimmt wird. Um dies zu tun, zieht der Bediener das zweite Einstellmittel 64 entlang des Verstellelements 32 nach unten an, bis das zweite Einstellmittel 64 an einem als Büchse ausgeführten Abstandhalter 70 anliegt, der an der ersten Unterlegscheibe 56 anliegt. Der Bediener fährt fort, das zweite Einstellmittel 64 zu drehen, so daß es fortfährt sich nach unten entlang des Verstellelements 32 zu verschieben, und das zweite Einstellmittel 64 wird den Abstandhalter 70 und die erste Unterlegscheibe 56 nach unten drücken, welche den Kraftspeicher 54 nach unten in ihre in Fig. 2 in durchgezogenen Linien gezeigte Stellung drücken wird. Wenn der Kraftspeicher 54 auf diese Weise zusammengedrückt ist, wird zwischen der ersten Unterlegscheibe 56 und dem Führungselement 48 des Halters 44 ein Freiraum zur Verfügung gestellt, so daß der Kraftspeicher 54 nicht länger das Verstellelement 32 bezogen auf den Halter 44 nach unten zieht, und es wird alle Reibung zwischen der Unterlegscheibe 56 und dem Führungselement 48 des Halters 44 entfernt. Der Bediener wird dann das Einstellmittel 50 drehen, so daß es sich entlang des Verstellelements 32 nach oben in die Stellung verschiebt, die in Fig. 2 in durchgezogenen Linien gezeigt wird. In dieser Stellung wurde das Sicherungselement 66 des Einstellelements 50 allgemein über das Führungselement 46 des Halters 44 und außer Flucht mit dem verengten Bereich 72 der Schlitze 40 in dem Führungselement 46 des Halters 44 gebracht. Der Bereich des Verstellelements 32, der mit dem verengten Bereich 72 des Schlitzes 40 fluchtet, ist schmäler als die Schulter 68 und kann leicht durch den verengten Bereich 72 des Schlitzes 40 gelangen. Der Abstandhalter 70 ist schmal genug, um durch den Schlitz 40 des zweiten Führungselements 48 des Halters 44 zu gelangen. Daher kann der Bediener, wenn das Gestänge 24 in die Anordnung gebracht wurde, die in Fig. 2 in durchgezogenen Linien gezeigt wird, dann das Verstellelement 32 gegen den Uhrzeigerdrehsinn durch die Schlitze 40 und 42 und weg von dem Halter 44, in eine Stellung verschwenken, die in unterbrochen Linien in Fig. 2 gezeigt wird. Mit dem Gestänge 25 in der Stellung, die in Fig. 2 in unterbrochenen Linien gezeigt wird, wird sich das Untermesser 20 im Uhrzeigerdrehsinn um das Schwenkelement 28 verschwenkt haben und kann dann einfach von dem Untermesserträger 26 für Servicezwecke oder zum Austauschen entfernt werden. Ebenso wird ein Freiraum zur Verfügung gestellt, so daß andere Instandhaltungsarbeiten einfacher durchgeführt werden können.

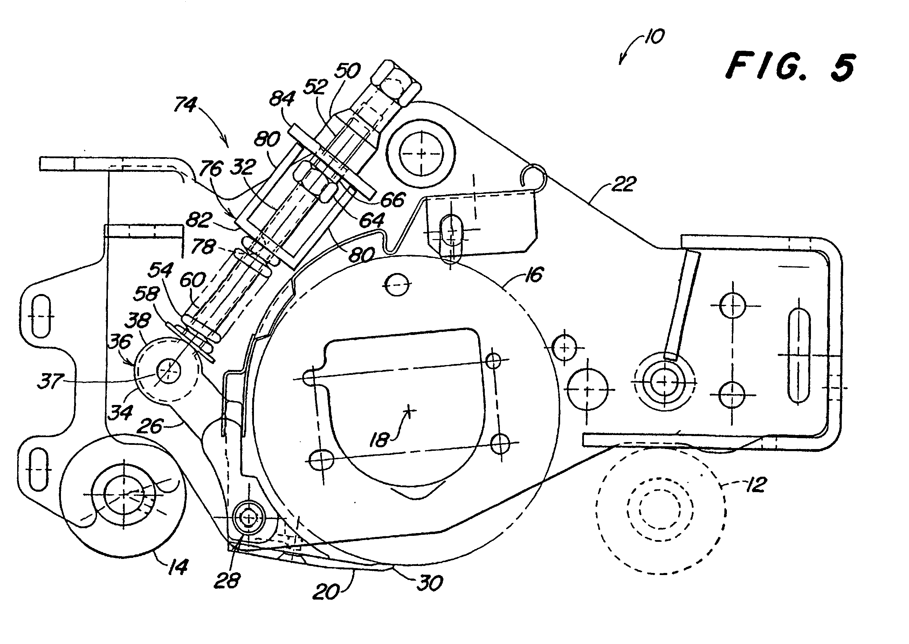

Die Figuren 1 - 4 illustrieren eine bevorzugte Ausführungsform der vorliegenden Erfindung. Wie auch immer, Änderungen der in diesen Figuren gezeigten Anordnung fallen ebenso unter die vorliegende Erfindung, wie sie beansprucht wird. Beispielsweise werden die Unterlegscheiben 56 und die Schulter 70 in den Zeichnungen als einzelne Teile gezeigt, aber sie können auch als ein einziges, ein Ganzes bildendes Teil vorgesehen sein. Eine andere alternative Ausführungsform 74 wird in Figur 5 gezeigt, welche einen Kragen 76 aufweist, der anstelle des doppelarmigen Halters 44, wie er in den Figuren 1 - 4 gezeigt wird, vorgesehen sein kann. Die alternative Ausführungsform 74 stellt einen erweiterten Kragen 76 mit einer zentralen Öffnung 78 zur Verfügung, durch die das Verstellelement 32 positioniert wird. Der Kragen 76 ist nicht mit dem Rahmen 22 verbunden. Der Kragen 76 weist Arme 80 auf, die sich von dem Hauptkörper 82 des Kragens 76 und in Anlage mit einem ersten Führungselement 84, das mit dem Rahmen 22 verbunden ist, erstrecken. Während des Mähvorgangs drückt der Kraftspeicher 54 den Kragen 76 entlang des Verstellelements 32 nach oben, so daß die Arme 80 an dem Führungselement 84 anliegen. Der Kraftspeicher 54 entfernt Spiel und Zwischenräume aus der alternativen Ausführungsform 74 an dem Verstellmechanismus sowohl in dem unteren wie dem oberen Endbereich des Verstellelements 32. Das auf das Verstellelement 32 aufgeschraubte Einstellmittel 64 kann in Anlage mit dem Sicherungselement 66 des Einstellmittels 50 gebracht werden, um dabei zu helfen, das Einstellmittel 50 in der gewählten Stellung auf dem Verstellelement 32 zu sichern. Um die alternative Ausführungsform 74 in eine Servicestellung zu bringen, zieht der Bediener das zweite Einstellmittel 64 entlang des Verstellelements 32 nach unten an, bis das zweite Einstellmittel 64 an dem Hauptkörper 82 des Kragens 76 anliegt.

Wenn der Bediener fortfährt das Einstellmittel 64 anzuziehen, wird sich der Hauptkörper 82 des Kragens 76 nach unten verschieben, um so den Kraftspeicher 54 weiter zusammenzudrücken, und die Arme 80 werden sich mit dem Hauptkörper 82 nach unten außer Anlage mit dem ersten Stützelement 84 verschieben. Die Kraft von dem Kraftspeicher 54 wird dabei von dem Führungselement 84 und dem Einstellmittel 50 entfernt. Der Bediener kann dann das Einstellmittel 50 nach oben von dem Verstellelement 32 lösen, bis sich das Sicherungselement 66 aus dem Führungselement 84 schiebt. Das Verstellelement 32 kann dann durch den verengten Bereich 32 des Schlitzes 40 in dem ersten Führungselement 84 verschwenkt werden und der Bediener kann die alternative Ausführungsform 74 gegen den Uhrzeigerdrehsinn in eine Servicestellung schwenken.

Die vorliegende Erfindung stellt daher einen Untermesserverstellmechanismus zur Verfügung, der es dem Bediener erlaubt, die Stellung des Untermessers 20 bezogen auf die Klingen 16 schnell und einfach zu verstellen. Die gewählte Untermesserstellung wird selbst dann beibehalten, wenn das Einstellmittel 50 an seinem Platz dadurch festgehalten wird, daß das zweite Einstellmittel 64 nach oben gegen das Sicherungselement 66 angezogen wird. Die vorliegende Erfindung stellt weiter einen Mechanismus zur Verfügung, der einen Kraftspeicher 54 aufweist, um Spielverluste von dem Gestänge 24 an beiden den oberen und unteren Bereichen des Verstellelements 32 zu entfernen. Es wird ein Mechanismus zur Verfügung gestellt, der die Kraft des Kraftspeichers 54 von dem Einstellmittel 50 entfernt, so daß das Gestänge 24 einfach in eine Wartungsstellung geschwenkt werden kann, die es dem Untermesser 20 erlaubt, gewartet oder ersetzt zu werden, oder die Durchführung anderer Instandhaltungsarbeiten gestattet. Das Gestänge 24 erlaubt es der Schneidkante 30 des Untermessers 20 nicht, sich nach oben in die Klingen 16 zu schieben, wenn das Untermesser 20 während des Mähvorgangs ein Hindernis berührt. Darüber hinaus kann das zweite Einstellmittel 64 entsprechend der vorliegenden Erfindung auf dem Verstellelement 32 nach unten angezogen werden, um den Kraftspeicher 54 während des Zusammenbauens zusammenzudrücken, was es dem Gestänge 24 entsprechend der vorliegenden Erfindung erlaubt, verhältnismäßig einfach und ohne es für die Montageperson notwendig zu machen, andere Werkzeuge zu benutzen, um den als Druckfeder ausgeführten Kraftspeicher 54 während des Zusammenbauens zusammenzudrücken, zusammengebaut zu werden.

## Patentansprüche

1. Verstellmechanismus mit einem Verstellelement (32), das an einem verschwenkbar an einem Rahmen (22) einer Schneideinheit (10) anbringbaren Untermesserträger (26) außerhalb dessen Schwenkachse angreift und durch wenigstens ein an dem Rahmen (22) angebrachtes Führungselement (46, 48) in seiner Längserstreckung verschiebbar geführt wird, mit einem Einstellmittel (50), das an dem Verstellelement (32) anbringbar und an dem Führungselement (46, 48) einerseits anlegbar ist, und mit einem Kraftspeicher (54), wobei der Kraftspeicher (54) zwischen dem Führungselement (46, 48) und dem Untermesserträger (26) angeordnet ist und den Untermesserträger (26) von dem Führungselement (46, 48) wegdrückt, **gekennzeichnet durch** ein zweites von dem ersten Führungselement (48) beabstandetes Führungselement (46), wobei zwischen dem ersten Führungselement (48) und dem zweiten Führungselement (46) ein weiteres Einstellmittel (64) vorgesehen ist, **durch** das die Stellung des Verstellelements (32) bezogen auf das erste Führungselement (48) unabhängig von dem Einstellmittel (50) verstellt werden kann.

2. Verstellmechanismus nach Anspruch 1, **dadurch gekennzeichnet, daß** das weitere Einstellmittel (64) als eine auf das Gewinde des Verstellelements (32) aufschraubbare Mutter ausgeführt ist.

3. Verstellmechanismus nach Anspruch 1 oder 2, **dadurch gekennzeichnet, daß** das Einstellmittel (50) bezogen auf das Verstellelement (32) unterschiedliche Stellungen, vorzugsweise durch das Verstellen einer zwischen dem Verstellelement (32) und dem Einstellmittel (50) vorgesehenen Gewindeverbindung, einnehmen kann.

4. Verstellmechanismus nach einem oder mehreren der vorherigen Ansprüche, **gekennzeichnet durch** einen Abstandhalter (70), der zwischen dem Kraftspeicher (54) und dem zweiten Einstellmittel (64) angeordnet ist.

5. Verstellmechanismus nach einem oder mehreren der vorherigen Ansprüche, **dadurch gekennzeichnet, daß** das erste Führungselement (48) und das zweite Führungselement (46) einen Halter (44) bilden, der mit dem Rahmen (22) verbindbar ist.

6. Verstellmechanismus nach einem oder mehreren der vorherigen Ansprüche, **dadurch gekennzeichnet, daß** das erste Führungselement (48) und/oder das zweite Führungselement (46) wenigstens einen Schlitz (40, 42) zur Führung des Verstellelements (32) aufweist, der vorzugsweise einenends offen ausgebildet ist.

7. Verstellmechanismus nach einem oder mehreren der vorherigen Ansprüche, **gekennzeichnet durch** ein an dem Verstellelement (32)anbringbares und vorzugsweise entlang seiner Längsachse verstellbares Sicherungselement (66), **durch** das das Verstellelement (32) wirksam zumindest an einem der Führungselemente (46, 48), vorzugsweise in einem der Schlitze (40, 42) gehalten werden kann.

8. Verstellmechanismus nach Anspruch 7, **dadurch gekennzeichnet, daß** sich der Schlitz (40) in Richtung seines geöffneten Endes derart verengt, daß das Verstellelement (32) nicht aber das Sicherungselement (66) durch die Verengung gelangen kann.

9. Verstellmechanismus nach einem oder mehreren der vorherigen Ansprüche, **dadurch gekennzeichnet, daß** zwischen dem ersten Einstellmittel (50) und dem zweiten Einstellmittel (64) ein Abstandhalter, der vorzugsweise durch das Sicherungselement (66) gebildet wird, angeordnet ist.

10. Schneideinheit, vorzugsweise eine Spindelmäherschneideinheit eines Mähgeräts mit einem Verstellmechanismus nach einem oder mehreren der vorherigen Ansprüche.

## Claims

1. A positioning mechanism with a positioning element (32) which engages on a bottom blade support (26), which can be fitted pivotally to a frame (22) of a cutting unit (10), outside its pivotal axis and which is guided slidably in its longitudinal direction by at least one guide element (46, 48) fitted on the frame (22), with an adjusting means (50) which can be fitted on the positioning element (32) and which can be applied to the guide element (46, 48) at one end, and with a force store (54), wherein the force store (54) is arranged between the guide element (46, 48) and the bottom blade support (26) and biases the bottom blade support (26) away from the guide element (46, 48), **characterized by** a second guide element (46) spaced from the first guide element (48), wherein a further adjusting means (64) is provided between the first guide element (48) and the second guide element (46), through which the position of the positioning element (32) relative to the first guide element (48) can be adjusted independently of the adjusting means (50).

2. A positioning mechanism according to claim 1, **characterized in that** the further adjusting means (64) is implemented as a nut screwed on the thread of the positioning element (32).

3. A positioning mechanism according to claim 1 or 2, **characterized in that** the adjusting means (50) can assume different positions relative to the positioning element (32), preferably by adjustment of a threaded connection provided between the positioning element (32) and the adjusting means (50).

4. A positioning mechanism according to one or more of the preceding claims, **characterized by** a spacer (70) which is arranged between the force store (54) and the second adjusting means (64).

5. A positioning mechanism according to one or more of the preceding claims, **characterized in that** the first guide element (48) and the second guide element (46) form a bracket (44) which can be connected to the frame (22).

6. A positioning mechanism according to one or more of the preceding claims, **characterized in that** the first guide element (48) and/or the second guide element (46) has at least one slot (40, 42) which is preferably open at one end for guiding the positioning element (32).

7. A positioning mechanism according to one or more of the preceding claims, **characterized by** a securing element (66) which can be fitted on the positioning element (32) and is preferably adjustable along its longitudinal axis, through which the positioning element (32) can be operatively held at least on one of the guide elements (46, 48), preferably in one of the slots (40, 42).

8. A positioning mechanism according to claim 7, **characterized in that** the slot (40) is so tapered in the direction of its open end that the positioning element (32) can but the securing element (66) cannot pass through the tapering.

9. A positioning mechanism according to one or more of the preceding claims, **characterized in that** a spacer, which is preferably formed by the securing element (66), is disposed between the first adjusting means (50) and the second adjusting means (64).

10. A cutting unit, preferably a cylinder mower cutting unit of a mower, with a positioning mechanism according to one or more of the preceding claims.

## Revendications

1. Mécanisme de réglage avec un élément de réglage (32), qui est appliqué sur un porte-lame inférieur (26) pouvant être appliqué de façon basculante sur un cadre (22) d'une unité de coupe (10) à l'extérieur de son axe de basculement et est guidé par au moins un élément de guidage (46, 48), appliqué sur le cadre (22), de façon à pouvoir à coulisser dans son extension longitudinale, avec un moyen d'ajustage (50), qui peut être appliqué sur l'élément de réglage (32) et peut être posé d'une part sur l'élément de guidage (46, 48), et avec un accumulateur de force (54), l'accumulateur de force (54) étant disposé entre l'élément de guidage (46, 48) et le porte-lame inférieur (26) et appuyant sur le porte-lame inférieur (26) en l'éloignant de l'élément de guidage (46, 48), **caractérisé par** un deuxième élément de guidage (46) espacé du premier élément de guidage (48), un autre moyen d'ajustage (64) étant prévu entre le premier élément de guidage (48) et le deuxième élément de guidage (46), par lequel la position de l'élément de réglage (32) peut être réglée par rapport au premier élément de guidage (48) indépendamment du moyen d'ajustage (50).

2. Mécanisme de réglage selon la revendication 1, **caractérisé en ce que** l'autre moyen d'ajustage (64) est réalisé sous la forme d'un écrou pouvant être vissé sur le filet de l'élément de réglage (32).

3. Mécanisme de réglage selon la revendication 1 ou 2, **caractérisé en ce que** le moyen d'ajustage (50) peut occuper différentes positions par rapport à l'élément de réglage (32), de préférence par le réglage d'un assemblage fileté prévu entre l'élément de réglage (32) et le moyen d'ajustage (50).

4. Mécanisme de réglage selon l'une quelconque ou plusieurs des revendications précédentes, **caractérisé par** un écarteur (70) qui est disposé entre l'accumulateur de forces (54) et le second moyen de réglage (64).

5. Mécanisme de réglage selon l'une quelconque ou plusieurs des revendications précédentes, **caractérisé en ce que** le premier élément de guidage (48) et le second élément de guidage (46) forment un support (44) qui peut être relié au cadre (22).

6. Mécanisme de réglage selon l'une quelconque ou plusieurs des revendications précédentes, **caractérisé en ce que** le premier élément de guidage (48) et/ou le second élément de guidage (46) présente(nt) au moins une fente (40, 42) pour le guidage de l'élément de réglage (32), qui est conçu de préférence de façon ouverte sur une extrémité.

7. Mécanisme de réglage selon l'une quelconque ou plusieurs des revendications précédentes, **caractérisé par** un élément de blocage (66) pouvant être appliqué sur l'élément de réglage (32) et réglable de préférence le long de son axe longitudinal, dans lequel l'élément de réglage (32) peut être maintenu de façon efficace au moins sur l'un des éléments de guidage (46, 48), de préférence dans l'une des fentes (40, 42).

8. Mécanisme de réglage selon la revendication 7, **caractérisé en ce que** la fente (40) se rétrécit en direction de son extrémité ouverte, de sorte que l'élément de réglage (32) peut passer par le rétrécissement, mais pas l'élément de blocage (66).

9. Mécanisme de réglage selon l'une quelconque ou plusieurs des revendications précédentes, **caractérisé en ce qu'**un écarteur, qui est formé de préférence par l'élément de blocage (66), est disposé entre le premier moyen de réglage (50) et le deuxième moyen de réglage (64) .

10. Unité de coupe, de préférence une unité de coupe de tondeuse à entraînement par roues latérales d'un appareil de fauchage avec un mécanisme de réglage selon l'une quelconque ou plusieurs des revendications précédentes.
